(19) Europäisches Patentamt
European Patent Office
Office européen des brevets

(11) **EP 1 876 043 A2**

(12) **EUROPEAN PATENT APPLICATION**

(43) Date of publication:
**09.01.2008 Bulletin 2008/02**

(51) Int Cl.:
***B60G 17/018*** (2006.01) ***B60G 17/06*** (2006.01)

(21) Application number: **07012958.0**

(22) Date of filing: **02.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **03.07.2006 JP 2006183494**

(71) Applicant: **KAYABA INDUSTRY CO., LTD.**
**Minato-ku,**
**Tokyo 105-6190 (JP)**

(72) Inventor: **Masamura, Tatsuya**
**Tokyo 105-6190 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Control device and method for shock absorber**

(57) A damping force control device (1) for a shock absorber (Dn) interposed between a sprung member (Bn) and an unsprung member (Wn) of a vehicle (A) comprises a damping force varying mechanism (3) which varies a damping force generated by the shock absorber (Dn). The device (1) comprises a control portion (2) which calculates a deviation ($\varepsilon n$) between a damping force target value ($Fsn$) and a damping force ($Fn$) currently generated by the shock absorber (Dn) (S205), and feedback-controls the damping force varying mechanism (3) according to the deviation ($\varepsilon n$) such that the damping force generated by the shock absorber (Dn) coincides with the damping force target value ($Fsn$) (S206-S209).

G1, G2, G3 SPRUNG MEMBER ACCELERATION SENSOR
L1, L2, L3, L4 LOAD SENSOR

**FIG. 1**

EP 1 876 043 A2

**Description**

FIELD OF THE INVENTION

This invention relates to the control of a shock absorber for a vehicle having a non-linear damping characteristic.

BACKGROUND OF THE INVENTION

JPH06-247117A published by the Japan Patent Office in 1994 discloses the application of Sky Hook control to the damping force control of a shock absorber for a vehicle.

The control device according to this prior art calculates a damping coefficient $C$ of the shock absorber by a relation $C = Cs \cdot V/Vs$ when the sign of a product of a sprung member speed $V$ of a sprung member and a stroke speed $Vs$ of the shock absorber is positive. In contrast, the control device calculates the damping coefficient $C$ of the shock absorber by a relation $C = Cs \cdot V$ when the sign is negative. Herein $Cs$ denotes a Sky Hook damping coefficient.

In Sky Hook control, when the sign of the sprung member speed $V$ and that of the stroke speed $Vs$ of the shock absorber are identical, the Sky Hook control force is calculated by multiplying the sprung member speed $V$ by the Sky Hook damping coefficient $Cs$. On the other hand, when the signs are different, control should be performed so as to cause the Sky Hook control force to become zero.

The prior art device adjusts the value of the damping coefficient $C$ of the shock absorber such that the Sky Hook control force $Cs \cdot V$ which is required when the signs of the sprung member speed $V$ and the stroke speed $Vs$ of the shock absorber are identical, becomes equal to a value $Vs \cdot C$, which is a damping force of the shock absorber obtained as a product of the stroke speed $Vs$ of the shock absorber and the damping coefficient $C$.

SUMMARY OF THE INVENTION

However, when adjusting the damping coefficient $C$ according to the prior art, it may be impossible to control the damping force of a shock absorber as intended.

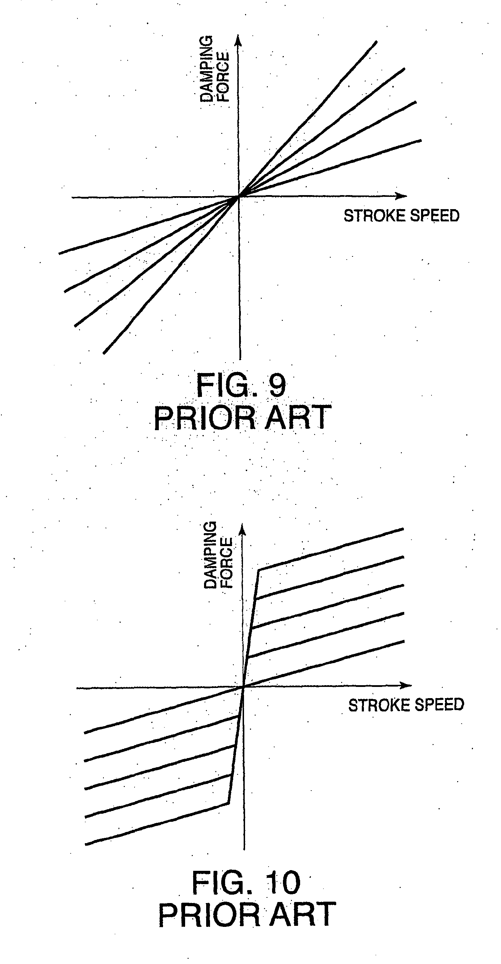

Referring to FIG. 9, when the characteristic of a generated damping force with respect to a stroke speed of a shock absorber (hereinafter referred to as the damping characteristic of the shock absorber) maintains a linear feature, the damping force of the shock absorber is controlled optimally by adjusting the damping coefficient $C$.

Referring to FIG. 10, in a shock absorber in which damping force is regulated by adjusting a cracking pressure of a damping valve, or in a shock absorber in which the damping characteristic is shifted in parallel using electrorheological fluid or magnetorheological fluid, the damping characteristic may have a non-linear feature. In a shock absorber having such a damping characteristic, it is difficult to regulate the damping force by simply altering the damping coefficient $C$ obtained by the above method. In other words, when the line indicative of the damping characteristic is linear and passes through the origin at which the stroke speed axis and the damping force axis intersect, the shock absorber can be caused to generate a preferable damping force by simply altering the damping coefficient $C$, but in a shock absorber having a non-linear damping characteristic as shown in FIG. 10, since the gradient of the damping characteristic line varies along its course, it may be impossible to cause the shock absorber to generate a preferable damping force by simply altering the damping coefficient $C$.

Further, if the damping force generated by the shock absorber varied completely in proportion to the stroke speed of the shock absorber, regulation of the damping force depending on the adjustment of the damping coefficient $C$ would be effective, but it is difficult to realize such a damping characteristic in a shock absorber, and hence a deviation may arise between the actual damping force and a damping force calculated by Sky Hook control, which may adversely affect the traveling comfort of the vehicle.

Still further, the prior art divides the Sky Hook control force $Cs \cdot V$ by the stroke speed $Vs$ to calculate the damping coefficient $C$. When the stroke speed $Vs$ takes a value around zero, the damping coefficient $C$ takes a very large value and the calculation error inevitably increases.

In a running region where the stroke speed $Vs$ is around zero, it is difficult to control the damping force with precision, and hence a stable damping force may not be generated due to a phenomenon known as hunting.

It is therefore an object of this invention to optimize damping force control of a shock absorber which has a non-linear damping characteristic.

In order to achieve the above object, this invention provides a damping force control device for a shock absorber interposed between a sprung member and an unsprung member of a vehicle. The damping force control device comprises a damping force varying mechanism which varies a damping force generated by the shock absorber, and a control portion functioning to calculate a deviation between a damping force target value and a damping force which is currently generated by the shock absorber, and feedback control the damping force varying mechanism according to the deviation such that the damping force generated by the shock absorber coincide with a damping force target value.

This invention also provides a damping force control method for a shock absorber provided with the damping force varying mechanism as described above. The method comprises calculating a deviation between a damping force target value and a damping force which is currently generated by the shock absorber, and feedback controlling the damping force varying mechanism according to the deviation such that the damping force generated by the shock absorber coincides with the damping force target value.

The details as well as other features and advantages of this invention are set forth in the remainder of the specification and are shown in the accompanying drawings.

BRIEF DESCRIPTION OF THE DRAWINGS

FIG. 1 is a schematic diagram of a control device for a shock absorber according to this invention.

FIG. 2 is a schematic perspective view of a vehicle indicating the location of sprung member acceleration sensors according to this invention.

FIG. 3 is a diagram showing a damping characteristic of the shock absorber.

FIG. 4 is a longitudinal sectional view of a damping force varying mechanism installed in the shock absorber.

FIG. 5 is a schematic longitudinal sectional view of the shock absorber.

FIG. 6 is a schematic longitudinal sectional view of another shock absorber to which this invention can be applied.

FIG. 7 is a block diagram of a control portion of the control device according to this invention.

FIG. 8 is a flowchart describing a damping force control routine executed by the control portion.

FIG. 9 is a diagram showing a damping characteristic of a shock absorber according to a prior art example.

FIG. 10 is a diagram showing a damping characteristic of a shock absorber according to another prior art example.

DESCRIPTION OF THE PREFERRED EMBODIMENTS

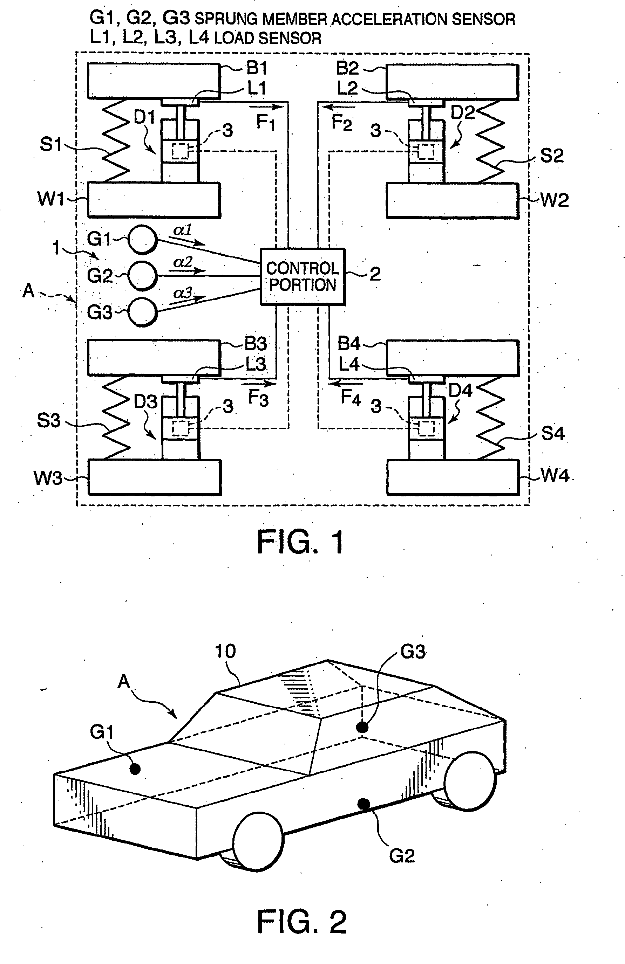

Referring to FIG. 1 of the drawings, a vehicle A comprises four wheels supported respectively by a vehicle body via four suspension springs S1-S4 and four shock absorbers D1-D4. From a mechanical viewpoint, the wheels correspond to unsprung members W1-W4 of the suspension springs S1-S4. Also, the vehicle corresponds to sprung members B1-B4 of the suspension springs S1-S4. The sum of the weight of the sprung members B1-B4 is equal to the weight of the vehicle.

A control device 1 of the shock absorbers D 1-D4 comprises a control portion 2 installed in an arbitrary position in the vehicle body, three sprung member acceleration sensors G1-G3 which detect an acceleration in a vertical direction of various parts of the vehicle body, load sensors L1-L4 which detect damping forces generated by the shock absorbers D1-D4, respectively, and damping force varying mechanisms 3 which vary a damping force generated by the shock absorbers D1-D4, respectively.

The shock absorber D1 is interposed between the sprung member B 1 and the unsprung member W1 in parallel with the suspension spring S 1. The shock absorber D2 is interposed between the sprung member B2 and the unsprung member W2 in parallel with the suspension spring S2. The shock absorber D3 is interposed between the sprung member B3 and the unsprung member W3 in parallel with the suspension spring S3. The shock absorber D4 is interposed between the sprung member B4 and the unsprung member W4 in parallel with the suspension spring S4.

Referring to FIG. 2, the sprung member acceleration sensors G1-G3 are sensors that detect acceleration of the vehicle body 10 in a vertical direction, and disposed in three arbitrary positions in the vehicle body 10 that are not aligned on a front-aft line or a lateral line of the vehicle.

The sprung member acceleration sensors G1-G3 output voltage signals corresponding to detected acceleration $\alpha 1$-$\alpha 3$ to the control portion 2 of the control device 1 of the shock absorbers D1-D4. On the basis of these voltage signals, the control portion 2 calculates an acceleration $\alpha 1$-$\alpha 3$ of each of the sprung members B1-B4 in a vertical direction. In the following description, an upward acceleration is represented by a positive value. Likewise, an upward acceleration of the unsprung members as well as upward damping forces generated by the shock absorbers D1-D4 are represented by positive values.

An acceleration $Xn$ of a sprung member Bn is explained by the following equation (1).

$$Xn = \beta n1 \cdot \alpha 1 + \beta n2 \cdot \alpha 2 + \beta n3 \cdot \alpha 3 \qquad (1)$$

where $n$ = an index chosen from the numbers of one to four for identifying four sprung members. For example, when $n$

= 1 in the equation (1), the acceleration *X1* of the sprung member B1 is calculated, and

β*n1*, β*n2*, β*n3* = constants determined according to the location of the sprung member acceleration sensors G1-G3, a position of the center of gravity of the vehicle body 10, a distance between the center of gravity of the vehicle body 10 and each of the sprung members B1-B4, a wheelbase of the vehicle A, a tread of the vehicle A, and so on.

The equation (1) denotes that, providing that the vehicle body 10 is a rigid body, an acceleration *X1-X4* of the sprung members B 1-B4 can be determined unambiguously by obtaining a vertical acceleration α*1-*α*3* of three parts of the vehicle body 10 which are arbitrarily determined but not aligned on a front-aft line or a lateral line of the vehicle.

Referring again to FIG. 1, the load sensors L1-L4 are disposed between the corresponding shock absorbers D1-D4 and the sprung members B1-B4, or between the corresponding shock absorbers D1-D4 and the unsprung members W1-W4. The load sensor L1-L4 detects a generated damping force *F1-F4* by the shock absorber D1-D4 and outputs corresponding voltage signals to the control portion 2.

Each of the damping force varying mechanisms 3, which varies the damping force generated by the shock absorbers D1-D4 comprises a mechanism that varies a cracking pressure of a damping valve with which the shock absorber D1-D4 is provided. The cracking pressure corresponds to a minimum pressure for opening a valve.

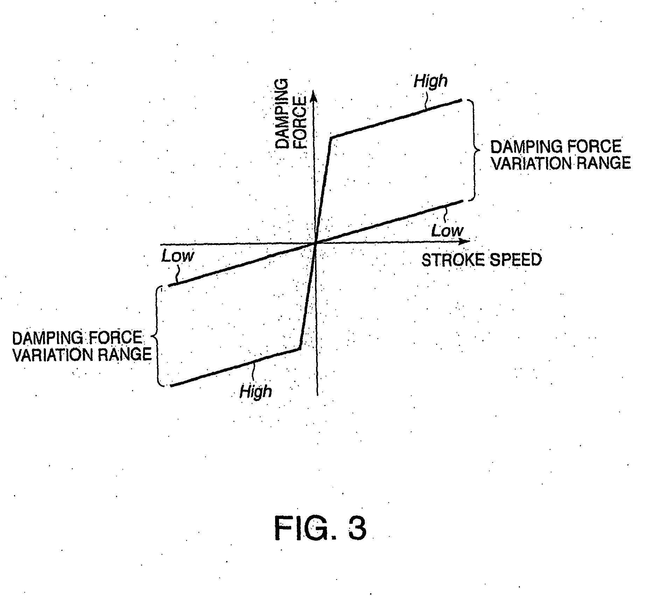

Referring to FIG. 3, when the cracking pressure is varied, the damping characteristic of the shock absorber D1-D4 performs a parallel shift along the ordinate in the figure within a range between a minimum damping characteristic *Low* and a maximum damping characteristic *High*. The damping force varying mechanisms 3 vary the damping force generated by the shock absorber Dn when the shock absorber Dn elongates and contracts, within this range.

The shock absorbers D1-D4 are constructed to have a common structure.

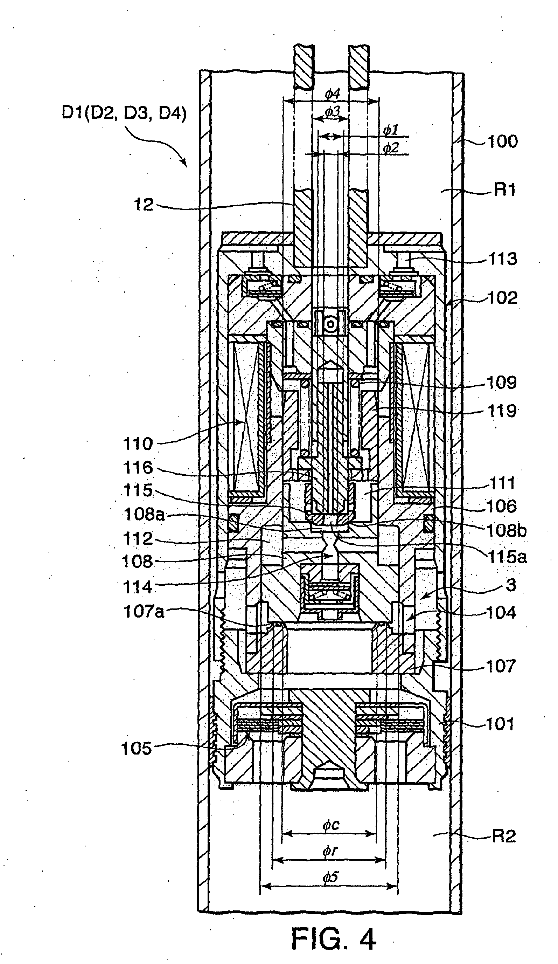

Referring to FIG. 4, each of the shock absorbers D1-D4 comprises a cylinder 100, a hollow cylindrical piston 101 sliding within the cylinder 100, and a hollow piston rod 12 fixed to the piston 101 via the damping force varying mechanism 3 and projecting axially outward from the cylinder 100.

The interior of the cylinder 100 is divided by the piston 101 into a rod side chamber R1 and a piston side chamber R2. The rod side chamber R1 and the piston side chamber R2 communicate with each other via a main passage 104 formed through the piston 101 and the damping force varying mechanism 3. A relief valve 105 is installed in the interior of the piston 101 facing the main passage 104. The damping force varying mechanism 3 is disposed in the main passage 104 in series with the relief valve 105.

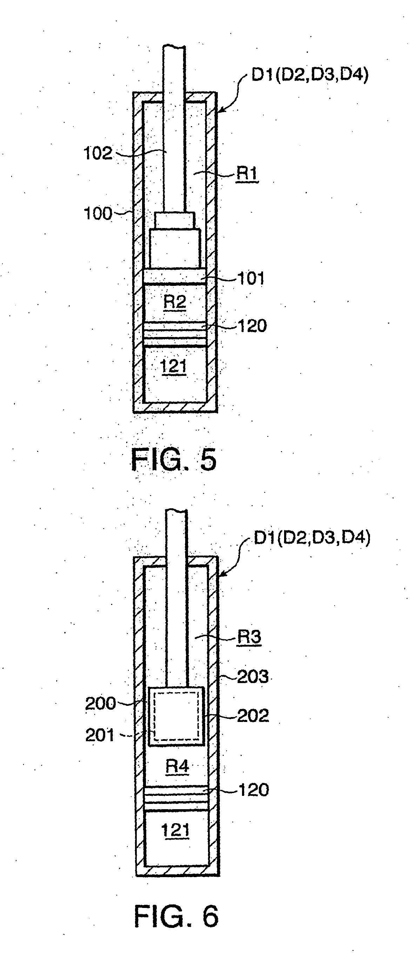

Referring to FIG. 5, a fluid such as hydraulic oil is enclosed in the cylinder 100. A gas chamber 121 is formed in the cylinder 100 by a free piston 120 disposed beneath the piston 101. The gas chamber 121 is filled with a high pressure gas to compensate for a capacity variation in the cylinder 100 which is caused by the piston rod 12 penetrating into and projecting from the cylinder 100 as the shock absorber D1-D4 elongates and contracts, by moving the free piston 120 vertically in the cylinder 100. The shock absorber D 1-D4 is constructed as a so-called single-shell type. The shock absorber D1-D4 may however be constructed as a double-shell type.

Referring again to FIG. 4, the damping force varying mechanism 3 comprises a cylindrical housing 102 of which an upper end is fixed to the piston rod 12 and a lower end is fixed to the piston 101. The damping force varying mechanism 3 further comprises a sleeve 106 fixed in the interior of the housing 102, a spool 108 which slides in the sleeve 106, and a valve seat member 107 gripped between the spool 108 and the piston 101. The piston 101 is screwed into the lower end of the housing 102. The valve seat member 107 comprises an annular valve seat 107a which has double circular seat portions in contact with the lower end of the spool 108.

On the rear side of the spool 108, or above the spool 108 in FIG. 4, a spring 109 which pushes the spool 108 towards the valve seat member 107 and a solenoid 110 which applies an upward thrust force on the spool 108 to decrease the pushing force of the spring 109 in response to an energizing current are enclosed in the housing 102.

An elongation pilot chamber 111 facing the rear face of the spool 108 is formed in the housing 102. A contraction pilot chamber 112 is also formed in the housing 102 between a step which is formed on the outer circumference of the spool 108 and the inner circumference of the sleeve 106.

A pressure in the rod side chamber R1 is led to the elongation pilot chamber 111 via an elongation pilot passage 113 formed in the housing 102. A pressure in the piston side chamber R2 is led to the contraction pilot chamber 112 via a contraction pilot passage 114 formed through the spool 108.

The contraction pilot chamber 112 and the elongation pilot chamber 111 communicates with each other via a through-hole 108a formed on the rear side of the spool 108 and the contraction pilot passage 114. An annular valve seat 108b is formed around the through-hole 108a and a cylindrical first sub-valve 115 having a bottom and pushed by the spring 109 is seated on the annular valve seat 108b from above to close the through-hole 108a while exerting a thrust force on the spool 108 towards the valve seat member 107.

A through-hole 115a is formed at the bottom of the first sub-valve 115. The through-hole 115a is closed by a cylindrical second sub-valve 116 pushed by the spring 109 from above.

The second sub-valve 116 is engaged with an armature 119. The solenoid 110 applies an upward force on the armature 109 depending on the energizing current to decrease the spring force which the spring 109 exerts on the second sub-valve 116. As a result the cracking pressure of the first sub-valve 115 and the cracking pressure of the second sub-valve 116 decrease. Simultaneously, the cracking pressure between the spool 108 which opens and closes the main passage 104 and the annular valve seat 107a decreases.

Referring to FIG. 3, the damping force generated by the shock absorber D 1-D4 varies within a range between the minimum damping characteristic *Low* to the maximum damping characteristic *High* in an increasing direction when the solenoid 110 decreases the spring force which the spring 109 exerts on the second sub-valve 116 depending on the energizing current. Herein, the maximum damping characteristic *High* corresponds to a case where the solenoid 110 is supplied with no energizing current, and the minimum damping characteristic *Low* corresponds to a case where the solenoid 110 is supplied with a maximum energizing current. As the energizing current decreases, the damping force characteristic performs a parallel shift along the ordinate while a gradient thereof remains unchanged. The parallel shift is performed in such a manner that, when the characteristic shown in the first quadrant of the diagram moves upward, the characteristic shown in the third quadrant moves simultaneously downward, and vice versa.

Referring again to FIG. 4, the dimensions of various parts of the damping force varying mechanism 3 are set as follows.

Specifically, assuming that

$\phi 1$ = diameter of upper small diameter part of second sub-valve 116;
$\phi 2$ = diameter of valve seat of through-hole 115a;
$\phi 3$ = diameter of valve seat of through-hole 108a;
$\phi 4$ = inner diameter of sleeve 106;
$\phi c$ = inner diameter of annular valve seat 107a;
$\phi r$ = outer diameter of annular valve seat 107a; and
$\phi 5$ = outer diameter of spool 108;

the dimensions of various parts of the damping force varying mechanism 3 are set to satisfy the following relations:

$$\phi 4^2 - \phi 2^2 > \phi 5^2 - \phi r^2$$

and

$$\phi 5^2 - \phi 4^2 > \phi c^2 - \phi 3^2.$$

The cracking pressure of the second sub-valve 116 is assumed to be *PC2* and the pressure in the rod side chamber R1 is assumed to be *Pa* when the shock absorber D1-D4 elongates or when the piston 101 moves upward in FIG. 4,

In a state where the relation $Pc2 \cdot (\phi 4^2 - \phi 2^2) > Pa \cdot (\phi 5^2 - \phi r^2)$ holds, the spool 108 does not lift from the annular valve seat 107a and the main passage 104 is closed. When the relation $Pc2 \cdot (\phi 4^2 - \phi 2^2) < Pa \cdot (\phi 5^2 - \phi r^2)$ holds, the spool 108 lifts from the annular valve seat 107a so that the main passage 104 opens. The cracking pressure *Pc2* is a pressure which causes the second sub-valve 116 to lift from the through-hole 115a of the first sub-valve 115 such that the elongation pilot chamber 111 communicates with the contraction pilot passage 114. This cracking pressure *Pc2* is adjustable by decreasing the spring force of the spring 109 by increasing the upward thrust force generated by the solenoid 110. By thus adjusting the upward thrust force by the solenoid 110, in the elongation stroke of the shock absorber D1-D4, the cracking pressure at which the spool 108 opens the main passage 104 also varies.

The cracking pressure of the first sub-valve 115 is assumed to be *Pc1* and the pressure in the piston side chamber R2 is assumed to be *Pb* when the shock absorber D1-D4 contracts or when the piston 101 moves downward in FIG. 4,

In a state where the relation $PC1 \cdot (\phi 5^2 - \phi 4^2) > Pb \cdot (\phi C^2 - \phi 3^2)$ holds, the spool 108 does not lift from the annular valve seat 107a and the main passage 104 is closed. When the relation $Pc1 \cdot (\phi 5^2 - \phi 4^2) < Pb \cdot (\phi C^2 - \phi 3^2)$ holds, the spool 108 lifts from the annular valve seat 107a so that the main passage 104 opens. The cracking pressure *PC1* is a pressure which causes the first sub-valve 115 to lift from the through-hole 108a of the spool 108 such that the elongation pilot chamber 111 communicates with the contraction pilot passage 114. This cracking pressure *Pc1* is adjustable by decreasing the spring force of the spring 109 by increasing the upward thrust force generated by the solenoid 110. By thus adjusting the upward thrust force generated by the solenoid 110, in the contraction stroke of the shock absorber D1-D4, the cracking pressure at which the spool 108 opens the main passage 104 also varies.

In both the elongation stroke and the contraction stroke of the shock absorber D 1-D4, the cracking pressure at which the spool 108 opens the main passage 104 can be varied using a single solenoid 110. The damping force varying mechanism 3 thereby varies the damping characteristic of the shock absorber D1-D4 within the range shown in FIG. 3..

As described above, as the energizing current of the solenoid 110 increases, the cracking pressures *Pc1* and *Pc2* decreases. In other words, when an energizing current supply to the solenoid 110 is accidentally shut off, the shock absorber D1-D4 generates the maximum damping force, which ensures a fail-safe operation of a vehicle suspension system.

The construction of the shock absorbers D1-D4 is an example and this invention is not limited by the type of shock absorbers. For example, the damping valve may be constituted by a valve seat formed in the fluid passage and a poppet valve seated thereon. The damping force varying mechanism may be constituted by a solenoid which exerts a thrust force on the valve in a direction to lift from the valve seat and a spring which pushes the valve in the opposite direction. In this case the thrust force of the solenoid adjusts the spring force exerted on the valve such that the cracking pressure at which the valve lifts off the valve sheet can be varied.

As describe above, the damping force varying mechanism 3 alters the cracking pressure of the damping valve installed in the shock absorber D1-D4,

Referring to FIG. 6, a different construction of the damping force varying mechanism will be described.

In a shock absorber which employs electrorheological fluid or magnetorheological fluid as working fluid, a device 201 which generates an electric field in the electrorheological fluid or a magnetic field in the magnetorheological to vary the viscosity of the fluid may be installed in a passage 200 connecting the rod side chamber R3 and the piston side chamber R4 as a damping force varying mechanism. The passage 220 is formed in a gap between the piston 202 and the cylinder 203, but the location of the passage 220 is not limited to this configuration. In a shock absorber employing electrorheological fluid, the device 201 comprises electric poles disposed on the outer circumference of the piston 202 and an energizing current supply mechanism supplying the electric poles with an energizing current. In a shock absorber employing magnetorheological fluid, the device 201 comprises a coil disposed in the piston 202 and an energizing current supply mechanism supplying the coil with energizing current. In any of the above cases, the variable damping characteristic as shown in FIG. 3 can be achieved.

Next, the control portion 2 will be described. The control portion 2 processes the signals output from the sprung member acceleration sensors G 1-G3 and the load sensors L1-L4, and calculates a damping force target value *Fsn* to be generated by the shock absorber D1-D4. The damping force target value *Fsn* corresponds to the aforesaid Sky Hook control force. The control portion 2 outputs a command in the form of a current or voltage signal to realize the damping force target value *Fsn* to the solenoid 112 in each of the shock absorbers D1-D4. The control portion 2 applies a Sky Hook control method to obtain the damping force target value *Fs1-FS4* of the shock absorbers D1-D4, respectively, from the sprung member speed *V1-V4* of the sprung member B1-B4. The control portion 2 then calculates deviation ε1-ε4 between these damping force target values *Fs1-Fs4* and the actual damping force *F1-F4* generated by the shock absorbers D1-D4. The control portion 2 finally adjusts the current value supplied to the solenoid 112 in each of the shock absorbers D1-D4 on the basis of the deviation ε1-ε4.

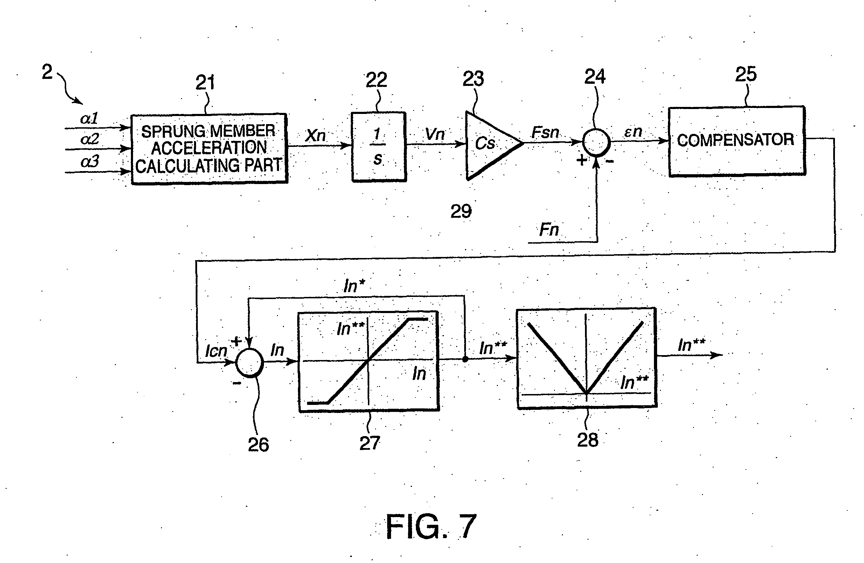

Referring to FIG. 7, the control portion 2 comprises a sprung member acceleration calculating part 21, an integrator 22, a multiplier 23, an adder 24, a compensator 25, an adder 26, a limiter 27 and a signal processing part 28.

The sprung member acceleration calculating part 21 calculates the sprung member acceleration *Xn* from the acceleration α1, α2, α3 detected by the sprung member acceleration sensors G1, G2, G3, respectively. The integrator 22 calculates an integral of the sprung member acceleration *Xn* and obtains a sprung member speed *Vn* of each sprung member Bn in a vertical direction. The multiplier 23 calculates a damping force target value *Fsn* by multiplying the sprung member speed *Vn* by a Sky Hook damping coefficient *Cs*. The adder 24 calculates a deviation εn by subtracting a damping force Fn of each shock absorber Dn detected by the load sensor Ln from the damping force target value *Fsn*. The compensator 25 multiplies the deviation εn, an integral value thereof, and a differential value thereof by a proportional gain, an integral gain, and a differential gain, respectively, and, by totaling the results, calculates a modified current command value *ICn*. The adder 26 calculates a difference In between a current command value *In\** that was calculated on the immediately preceding occasion when this control process was performed and the modified current command value *ICn* calculated on the present occasion. The limiter 27 calculates a current command value *In\*\** for the present occasion from the difference In while limiting the absolute value of the current command value *In\*\** with a predetermined upper limit to prevent an excessive current from flowing through the solenoid 112. The processing part 28 performs absolute value processing on the current command value *In\*\** for the present occasion which has been output by the limiter 27, and outputs a processed value to a drive circuit of the solenoid 112. It should be noted that *n* in the above referential signs is an index chosen from the numbers one to four for identifying the four sprung members, respectively.

The action of the each part of the control portion 2 will now be described in detail. The sprung member acceleration part 21 performs the calculation described above to obtain the sprung member acceleration *Xn* when the values of the acceleration α1, α2, α3 are input from the sprung member acceleration sensor G1, G2, G3. The integrator 22 then calculates the sprung member speed *Vn* of each sprung member Bn in a vertical direction from the sprung member acceleration *Xn*.

The sprung member speed Vn output from the integrator 22 is input into the multiplier 23. The multiplier 23 multiplies the sprung member speed *Vn* by the Sky Hook damping coefficient *Cs* to calculate the damping force target value *Fsn.*

The adder 24 subtracts the damping force *Fn* which the shock absorber Dn currently generates from the damping force target value *Fsn* to calculate the deviation εn, and outputs the deviation εn to the compensator 25.

The compensator 25 calculates the modified current command value *ICn* using the equation (2) below.

$$ Icn = Kp \cdot \varepsilon n + Ki \cdot \int \varepsilon n \cdot dt + Kd \cdot \frac{d\varepsilon n}{dt} \tag{2} $$

where

*Kp* = proportional gain,
*Ki* = integral gain, and
*Kd* = differential gain.

The modified current command value *ICn* is a sum of a product of the deviation εn and the proportional gain *Kp,* a product of an integral value of the deviation εn and the integral gain *Ki,* and a product of a differential value of the deviation εn and the differential gain *Kd.* The proportional gain *Kp,* the integral gain *Kim* and the differential gain *Kd* are determined in advance considering response and stability of control.

The modified current command value *ICn* is input into the adder 26 together with the current command value *In\** calculated on the immediately preceding occasion when this control process was performed. The adder 26 calculates the difference In between the modified current command value *ICn* and the current command value *In\** on the immediately preceding occasion. The limiter 27 calculates the current command value *In\*\** for the present occasion by referring to a map which defines a relation between the current command value *In\*\** and the difference *In.* As shown in FIG. 7, this map prevents the absolute value of the current command value *In\*\** from exceeding an upper limiting value even when the difference *In* is large, thereby preventing an excessive energizing current from being supplied to the solenoid 112. The absolute value of the current command value *In\*\** is thus limited by the upper limiting value.

The processing part 28 performs absolute value processing on the current command value *In\*\** for the present occasion. In other words, the processing part 28 outputs the current command value *In\*\** to the drive circuit of the solenoid 112 as is when the current command value *In\*\** is a positive value. When the current command value *In\*\** is a negative value, the processing part 28 replaces the negative sign of the current command value *In\*\** by the positive sign and outputs the positive value to the drive circuit of the solenoid 112.

After terminating the control process, the control portion 2 inputs the current command value *In\*\** that was output from the limiter 27 into the adder 26 as the current command value *In\** on the immediately preceding occasion, for the next occasion of the execution of this control process.

When the damping force target value is greater than the damping force *Fn* currently generated by the shock absorber Dn, the deviation εn takes a positive value, and the modified current command value *ICn* also takes a positive value. When this modified current command value *ICn* is input into the adder 26, the difference *In* is calculated as a smaller value than the current command value *In\** on the immediately preceding control occasion such that the difference between *In\** and *In* is equal to the modified current command value *ICn.* When this difference In is input into the limiter 27, the current command value *In\*\** which is newly output on the present occasion should be smaller than the current command value *In\** that was output on the immediately preceding occasion . Herein, the shock absorber Dn is provided with a smaller variable damping force as the energizing current supplied to the solenoid 112 increases. When no energizing current is supplied to the solenoid 112, the shock absorber Dn generates a maximum damping force. In this case, therefore, the shock absorber Dn generates a greater damping force than on the immediately preceding occasion when the control process was performed.

When on the other hand, the damping force target value Fsn is smaller than the damping force *Fn* currently generated by the shock absorber Dn, the deviation εn takes a negative value, and the modified current command value *ICn* also takes a negative value. When this modified current command value *ICn* is input into the adder 26, the difference In is calculated as a greater value than the current command value *In\** on the immediately preceding control occasion such that the difference between *In* and *In\** is equal to the modified current command value *ICn.* When this difference In is input into the limiter 27, the current command value *In\*\** which is newly output on the present occasion should be greater than the current command value *In\** on the immediately preceding occasion. In this case, therefore, the shock absorber Dn generates a smaller damping force than the damping force generated on the immediately preceding occasion when the control process was preformed.

The control portion 2 repeatedly performs the above control process to cause the damping force *Fn* generated by the shock absorber Dn to coincide with the damping force target value *Fsn.* When the damping force *Fn* generated by the shock absorber Dn coincides with the damping force target value Fsn, the deviation ε*n* becomes zero, and the current command value *In\** on the immediately preceding control occasion and the current command value *In\*\** on the present occasion take an identical value. The solenoid 112 maintains the cracking pressure of the damping valve at the same value as on the immediately preceding control occasion so as to maintain the damping force *Fn* of the shock absorber Dn at the same value.

When the damping force target value is smaller than the minimum damping force that can be generated by the shock absorber Dn, or in other words when the damping force target value is located nearer to the abscissa than the damping characteristic *Low* in FIG. 3 or the damping force target value *Fsn* is located in the second quadrant or the fourth quadrant in the figure, the value of the current command value *In\*\** is necessarily limited by the limiter 27. As long as the damping force target value continues to take a smaller value than the minimum damping force that can be generated by the shock absorber Dn, the current command value *In\*\** takes a value limited by the limiter 27. In such a case, therefore, the shock absorber Dn continues to generate the minimum damping force shown as the damping characteristic *Low* in FIG. 3.

In Sky Hook control, when the direction of the sprung member speed *Vn* and the direction of the stroke speed are not the same, or in other words when the sign of the product of the sprung member speed *Vn* and the stroke speed is negative, it is preferable to make the Sky Hook control force zero. The shock absorber Dn cannot generate a damping force which is located nearer to the abscissa than the line of the damping characteristic *Low* in FIG. 3. Even in a case where the sign of the product of the sprung member speed *Vn* and the stroke speed is negative, when the damping force target value *Fsn* is smaller than the minimum damping force that can be generated by the shock absorber Dn or the sign of the product of the sprung member speed *Vn* and the stroke speed is negative, the damping force which is to be generated by the shock absorber Dn should be made as small as possible. As a result, the value of the current command value *In\*\** is limited without failure by the limiter 27 such that the shock absorber Dn generates the minimum damping force located on the line of the damping characteristic Low according to the stroke speed, thereby maintaining the traveling comfort of the vehicle.

The control device 1 can therefore perform Sky Hook control without determining the sign of the product of the sprung member speed *Vn* and the stroke speed, which is required in the prior art, and hence it is not necessary to divide the Sky Hook control force *Cs · V* by the stroke speed *Vs* to calculate the Sky Hook damping coefficient *Cs.* Hence, even when the stroke speed *Vs* is in a region near to zero, an increase in the calculation error does not occur and a so-called hunting phenomenon does not take place. The shock absorber Dn therefore generates a stable damping force.

The control device 1 controls the damping force of the shock absorber Dn having a non-linear damping characteristic without adjusting the damping coefficient, by feedback-controlling a damping force according to a deviation ε*n* between the damping force target value *Fsn* and the damping force *Fn* currently generated by the shock absorber Dn. This feedback control can be performed without a complicated process, but makes the shock absorber Dn highly responsive in following the damping force target value *Fsn.* The control device 1 thus realizes optimum control of the shock absorber Dn having a non-linear damping characteristic.

According to the above control process, when the stroke speed of the shock absorber Dn varies, the damping force generated by the shock absorber Dn can follow the damping force target value *Fsn* with good response. Since the shock absorber Dn can always generate a damping force that is substantially equal to the damping force target value *Fsn*, vibration input from the road surface is prevented from being transferred to the vehicle body 10, and hence an excellent vibration insulating effect is obtained and the traveling comfort of the vehicle is improved remarkably. Further, since this control device 1 causes the damping force *Fn* generated by the shock absorber Dn which is input from the load sensor Ln to coincide with the damping force target value *Fsn*, the shock absorber Dn can generate an intended damping force irrespective of scatter in the damping characteristic of the shock absorber Dn or variation in the damping characteristic due to variation in temperature. The control device 1 brings a stable control effect without adversely affecting the traveling comfort of the vehicle.

In the above embodiment, Sky Hook control is described as an example of the control performed by the control device 1, but the control device 1 of the shock absorber according to this invention, has a control principle of controlling a damping force according to a deviation ε*n* between the damping force target value and the damping force *Fn* which the shock absorber Dn currently generates. The method for determining the damping force target value is not limited to the Sky Hook control method, and any other method may be applied. For example, a control method applied for calculating an optimum damping force for roll control of the vehicle or pitch or squat control of the vehicle on the occasion of braking may be used to calculate the damping force target value *Fsn.* The damping force target value *Fsn* can be determined according to any appropriate control method.

The control portion 2 may be constituted by a microcomputer comprising an amplifier for amplifying the signals output from the sprung member acceleration sensors G1-G3 and the load sensors L1-L4, an analog-to-digital converter for converting an analog signal into a digital signal, a central processing unit (CPU), a read-only memory (ROM), a random access memory (RAM), an input/output interface (I/O interface), a crystal oscillator, and a bus line connecting these devices. The control process for processing the signals, calculating the variable damping force, and controlling the solenoid 112 in each of the damping force varying mechanisms 3 based on the calculation result is specified in a program and stored in the ROM or another storage device in advance.

The control portion 2 may be constituted by a plurality of microcomputers. When the vehicle A is provided with an Electronic Control Unit (ECU), the control portion 2 may be integrated into the ECU without providing the control portion 2 in the form of an independent unit.

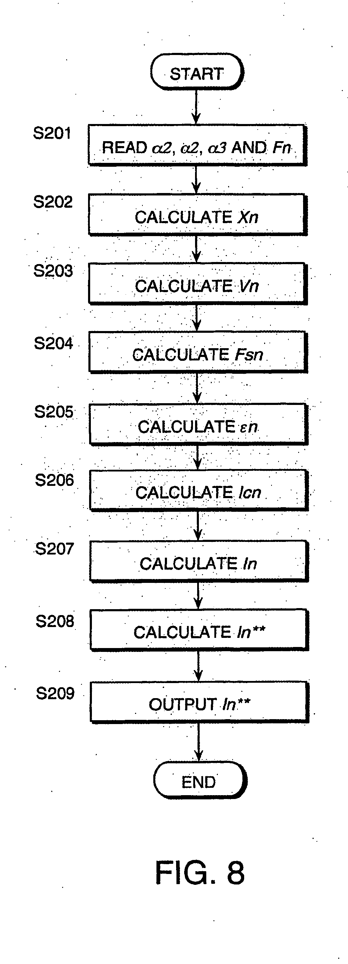

Referring to FIG. 8, a control routine executed by the control portion 2 when it is constituted by a microcomputer will be described. The control portion 2 executes this routine repeatedly at regular intervals of ten milliseconds, for example,

In a step S201, the control portion 2 reads the acceleration $\alpha 1$, $\alpha 2$, $\alpha 3$ detected by the sprung member acceleration sensors G1, G2, G3 and the damping force $Fn$ of the shock absorber Dn detected by the load sensors Ln.

In a step S202, the control portion 2 calculates a sprung member acceleration $Xn$ from the acceleration $\alpha 1$, $\alpha 2$, $\alpha 3$.

In a step S203, the control portion 2 calculates a sprung member speed $Vn$ of the sprung member Bn in a vertical direction from the sprung member acceleration $Xn$.

In a step S204, the control portion 2 calculates a damping force target value $Fsn$ which corresponds to a Sky Hook control force as a product of the sprung member speed Vn and the Sky Hook damping coefficient $Cs$.

In a step S205 the control portion 2 calculates a deviation $\varepsilon n$ between the damping force target value $Fsn$ and the damping force $Fn$ currently generated by the shock absorber Dn.

In a step S206, the control portion 2 multiplies the deviation $\varepsilon n$, the integral value of the deviation $\varepsilon n$, and the differential value of the deviation $\varepsilon n$ by a proportional gain, an integral gain, and a differential gain, respectively, and calculates a modified current command value $ICn$ by totaling these results.

In a step S207, the control portion 2 calculates a difference In between the modified current command value $ICn$ and a current command value $In*$ calculated on the immediately preceding occasion when the routine was executed.

In a step S208, the control portion 2 calculates a current command value $In**$ for the present damping force control from the difference $In$.

In a step S209, the control portion 2 performs absolute value processing on the current command value $In**$ and outputs the result to the drive circuit of the solenoid 112.

The control portion 2 executes this routine repeatedly to control the variable damping force of the shock absorber Dn.

When the shock absorber Dn uses magnetorheological fluid as shown in FIG. 6, the control portion 2 calculates a current command value as a current which the shock absorber Dn requires to generate the damping force corresponding to the damping force target value $Fsn,$ by referring to a map specifying the relation between the current command value and the damping force target value $Fsn$. When the shock absorber Dn uses electrorheological fluid, voltage control is performed instead of current control, and hence the current and current command value in the steps in FIG. 8 are replaced by a voltage and a voltage command value.

The control portion 2 calculates the voltage command value which the shock absorber Dn requires to generate the damping force corresponding to the damping force target value $Fsn$ as a voltage command value by referring to a map specifying the relation between the voltage command value and the damping force.

The contents of Tokugan 2006-183494, with a filing date of July 3, 2006 in Japan, are hereby incorporated by reference.

Although the invention has been described above with reference to a certain embodiment of the invention, the invention is not limited to the embodiment described above. Modifications and variations of the embodiment described above will occur to those skilled in the art, within the scope of the claims.

For example, in the above embodiment, the damping force varying mechanism 3 is set to decrease the variable damping force as the energizing electric current increases, but it is still possible to cause the damping force varying mechanism 3 to increase the variable damping force as the energizing electric current increases. In this case, by arranging the adder 26 to calculate the sum of the current command value $In*$ on the immediately preceding control occasion and the modified current command value $ICn$ on the present control occasion instead of calculating the difference between the current command value $In*$ on the immediately preceding control occasion and the modified current command value $ICn$ on the present control occasion, the same control result will be obtained.

In the above embodiment, the acceleration sensors are used to execute Sky Hook control. Physical quantities and state quantities used for the control are dependent on the control method applied, and hence any other sensors suitable for the applied control method may be used.

In the above embodiment, the damping force varying mechanism 3 is set to vary the cracking pressure of the damping valve, or vary the viscosity of the electrorheological fluid or magnetorheological fluid in order to vary the damping force. However, the damping force varying mechanism may be constituted by a variable orifice disposed in the shock absorber Dn and a control portion 2 configured to vary the flow cross sectional area of the variable orifice.

The embodiments of this invention in which an exclusive property or privilege is claimed are defined as follows:

**Claims**

1. A damping force control device (1) for a shock absorber (Dn) interposed between a sprung member and an unsprung member of a vehicle (A), comprising:

   a damping force varying mechanism (3) which varies a damping force generated by the shock absorber (Dn);
   a control portion (2) functioning to:

   calculate a deviation ($\varepsilon n$) between a damping force target value ($Fsn$) and a damping force ($Fn$) which is currently generated by the shock absorber (Dn) (S205); and
   feedback-control the damping force varying mechanism (3) according to the deviation ($\varepsilon n$) such that the damping force generated by the shock absorber (Dn) coincide with the damping force target value ($Fsn$) (S206-S209).

2. The damping force control device (1) as defined in Claim 1, wherein the damping force varying mechanism (3) is configured to vary the damping force generated by the shock absorber (Dn) according to a supplied electric current, and the control portion (2) further functions to calculate a current command value according to the deviation ($\varepsilon n$) (S208), and supply an electric current corresponding to the current command value to the damping force varying mechanism (3) (S209).

3. The damping force control device (1) as defined in Claim 2, wherein the damping force varying mechanism (3) is configured to decrease the damping force generated by the shock absorber (Dn) as the supplied electric current increases, and the control portion (2) further functions to repeatedly feedback-control the damping force varying mechanism (3), calculate a modified current command value ($ICn$) from the deviation ($\varepsilon n$) (S206), calculate a difference ($In$) between a current command value ($In^*$) on the immediately preceding feedback control occasion and the modified current command value ($ICn$) (S207), and calculate a current command value ($In^{**}$) for the present feedback control occasion according to the difference ($In$) (S208).

4. The damping force control device (1) as defined in Claim 2, wherein the damping force varying mechanism (3) is configured to increase the variable damping force generated by the shock absorber (Dn) as the supplied electric current increases, and the control portion (2) further functions to repeatedly feedback control the damping force varying mechanism (3), calculate a modified current command value ($ICn$) from the deviation ($\varepsilon n$) (S206), calculate a sum of a current command value ($In^*$) on the immediately preceding feedback-control occasion and the modified current command value ($ICn$) (S207), and calculate a current command value ($In^{**}$) for the present feedback control occasion according to the sum (S208).

5. The damping force control device (1) as defined in any one of Claim 1 through Claim 4, wherein the control portion (2) further functions to determine the damping force target value ($Fsn$) by applying a Sky Hook control method (S204).

6. The damping force control device (1) as defined in Claim 5, wherein the control portion (2) further functions to calculate the damping force target value ($Fsn$) as a product of a sprung member speed ($Vn$) of the sprung member in a vertical direction and a Sky Hook damping coefficient ($Cs$) (S204).

7. The damping force control device (1) as defined in any one of Claim 1 through Claim 6, further comprising a load sensor (L1-L4) which detects the damping force ($Fn$) that is currently generated by the shock absorber (Dn).

8. The damping force control device (1) as defined in any one of Claim 1 through Claim 7, wherein the damping force varying mechanism (3) comprises a damping valve (108, 115, 116), and a solenoid (112) which varies a cracking pressure of the damping valve (108, 115, 116) according to a supplied electric current, and the control portion (2) further functions to feedback-control the supplied electric current to the solenoid (110) according to the deviation ($\varepsilon n$) (S209).

9. The damping force control device (1) as defined in any one of Claim 1 through Claim 7, wherein the shock absorber (Dn) is configured to generate the damping force depending on a viscosity of a magnetorheological fluid enclosed therein, the damping force varying mechanism (3) comprises a viscosity varying mechanism (201) which varies the viscosity of the magnetorheological fluid in the shock absorber (Dn) according to a supplied electric current, and the control portion (2) further functions to feedback-control the current supplied to the viscosity varying mechanism (201) according to the deviation ($\varepsilon n$) (S209).

10. The damping force control device (1) as defined in any one of Claim 1 through Claim 7, wherein the shock absorber (Dn) is configured to generate the damping force depending on a viscosity of an electrorheological fluid enclosed therein, the damping force varying mechanism (3) comprises a viscosity varying mechanism (201) which varies the viscosity of the electrorheological fluid in the shock absorber (Dn) according to a supplied electric current, and the control portion (2) further functions to feedback-control the current supplied to the viscosity varying mechanism (201) according to the deviation ($\varepsilon n$) (S209).

11. The damping force control device (1) as defined in any one of Claim 1 through Claim 10, wherein the damping force varying mechanism (3) is configured to have a function to continuously vary the damping force generated by the shock absorber (Dn).

12. The damping force control device (1) as defined in any one of Claim 1 through Claim 11, wherein the control portion (2) further functions to vary the damping force generated by the shock absorber (Dn) according to the deviation ($\varepsilon n$) in such a manner that the damping force characteristic of the shock absorber (Dn), which is represented by a relation between a stroke speed and a generated damping force ($Fn$) of the shock absorber (Dn) performs a parallel shift along an axis of the generated damping force (S206-S209).

13. The damping force control device (1) as defined in Claim 12, wherein the damping force characteristic is a non-linear characteristic according to which the damping force varies more steeply in a region where the stroke speed is smaller than a predetermined speed than in a region where the stroke speed is greater than the predetermined speed, irrespective of a stroke direction of the shock absorber (Dn).

14. A damping force control method for a shock absorber (Dn) interposed between a sprung member and an unsprung member of a vehicle (A), the shock absorber (Dn) comprising a damping force varying mechanism (3) which varies a damping force generated by the shock absorber (Dn), the method comprising:

calculating a deviation ($\varepsilon n$) between a damping force target value ($Fsn$) and a damping force ($Fn$) which is currently generated by the shock absorber (Dn) (S205); and
feedback-controlling the damping force varying mechanism (3) according to the deviation ($\varepsilon n$) such that the damping force generated by the shock absorber (Dn) coincides with the damping force target value ($Fsn$) (S206-S209).

G1, G2, G3 SPRUNG MEMBER ACCELERATION SENSOR
L1, L2, L3, L4 LOAD SENSOR

FIG. 1

FIG. 2

FIG. 3

D1(D2, D3, D4)

φ4
φ3
φ1
φ2

100

R1

12
113
102
109
119
110
116
115
108a
112
108
114
107a
111
106
108b
115a
3
104
107
101
105

φc
φr
φ5

R2

FIG. 4

FIG. 5

FIG. 6

2

21
α1
α2
α3
SPRUNG MEMBER ACCELERATION CALCULATING PART
$Xn$

22
$\dfrac{1}{s}$
$Vn$

23
$Cs$
$Fsn$

24
+ −
$\varepsilon n$

29

$Fn$

25
COMPENSATOR

$In^*$

$Icn$ + −
$In$

27
$In^{**}$
$In$

$In^{**}$

28
$In^{**}$
$In^{**}$

26

FIG. 7

EP 1 876 043 A2

START

S201     READ $\alpha2$, $\alpha2$, $\alpha3$ AND $Fn$

S202     CALCULATE $Xn$

S203     CALCULATE $Vn$

S204     CALCULATE $Fsn$

S205     CALCULATE $\varepsilon n$

S206     CALCULATE $Icn$

S207     CALCULATE $In$

S208     CALCULATE $In^{**}$

S209     OUTPUT $In^{**}$

END

# FIG. 8

FIG. 9
PRIOR ART

FIG. 10
PRIOR ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06247117 A